# EUROPÄISCHE PATENTSCHRIFT

(11) **EP 2 417 041 B1**
(45) Veröffentlichungstag und Bekanntmachung des Hinweises auf die Patenterteilung: **12.06.2013**
(21) Anmeldenummer: 10717526.7
(22) Anmeldetag: 06.04.2010
(51) Int. Cl.: B65G 39/09, F16C 13/02

(54) **Lageranrodnung mit einer Tragrolle**
Bearing arrangement with a support roller
Ensemble palier avec un rouleau porteur

(30) Priorität: 09.04.2009 DE 102009017192
(43) Veröffentlichungstag der Anmeldung: 15.02.2012
(73) Patentinhaber: Aktiebolaget SKF, 415 50 Göteborg (SE)
(72) Erfinder: PICKEL, Edgar, 97334 Sommerach (DE); HORLING, Peter, 97453 Schonungen (DE)
(74) Vertreter: Schonecke, Mitja
(86) Internationale Anmeldenummer: PCT/EP2010/002148
(87) Internationale Veröffentlichungsnummer: WO 2010/115602

(56) Entgegenhaltungen:
- EP-A1- 0 298 356
- EP-A2- 0 639 722
- DE-A1- 3 238 634
- DE-A1-102007 060 968
- US-A- 3 841 721
- US-A1- 2005 244 221

## Beschreibung

Die Erfindung betrifft eine Lageranordnung für eine zumindest abschnittsweise hohlzylindrisch ausgebildete Tragrolle, mit mindestens einem die Tragrolle lagernden Lager, wobei zwischen einem Ring des Lagers und der Tragrolle direkt oder indirekt ein Trägerelement angeordnet ist, wobei das Trägerelement zwei sich in Achsrichtung der Tragrolle bzw. des Lagers erstreckende hohlzylindrische Abschnitte aufweist, die mit einem sich in radiale Richtung oder unter einem Winkel (zwischen 0° und 45°) zur radialen Richtung erstreckenden ringförmigen Abschnitt verbunden sind.

Eine gattungsgemäße Lageranordnung ist aus der DE 32 38 634 A1 und aus der EP 0 298 356 A1 bekannt. Für die Lagerung von Tragrollen sind im Stand der Technik diverse Möglichkeiten bekannt. Die DE 1 738 837 U offenbart eine gattungsgemäße Lageranordnung. Eine solche Lösung ist auch aus der GB 592 043 A bekannt. Die DE 28 01 879 A1 zeigt eine weitere ähnliche Lageranordnung, wobei auch eine elastomere Zwischenschicht zwecks Dämpfung des Systems zum Einsatz kommt. Eine als Trägerelement dienende Hülse verbreitert sich in einem axialen Endbereich radial und ist mit ihrem radial äußeren Bereich an der zylindrischen Innenfläche der Tragrolle angeschweißt. Weitere Lageranordnungen zur gedämpften Lagerung einer Tragrolle sind aus der AT 215 887**,** aus der DE 24 00 701 A1 und aus der US 3 362 760 bekannt. Des weiteren offenbaren die US 2005/244221 A1**,** die US 3 841 721 A**,** die DE 10 2007 060 968 A1 und die EP 0 639 722 A2 weitere Lösungen.

Allen Lösungen ist es gemein, dass ein relativ hoher fertigungstechnischer Aufwand getrieben werden muss, um die Lageranordnung herzustellen. Teilweise müssen möglichst genau die Fertigungstoleranzen eingehalten werden, um eine Lageranordnung mit hoher Rundlaufgenauigkeit zu erhalten. Ferner ist auch mitunter die Steifigkeit des Aufbaus nicht ausreichend, insbesondere wenn - wie bei der DE 28 01 879 A1 **-** radial verbreiterte Hülsenabschnitte am Inneren der Tragrolle festgeschweißt werden müssen.

Nachteilig ist es, dass die Tragrollenanordnungen ein relativ hohes Gewicht aufweisen. Dementsprechend sind die von der Lageranordnung zu tragenden Lasten hoch. Ferner ist es nachteilig, dass im Falle von Fehlstellungen zwischen der Achse des Lagers und der Achse der Tragrolle - beispielsweise im Falle des Einwirkens entsprechender Lasten auf die Tragrolle - hohe Belastungen in das Lager eingetragen werden können.

Der Erfindung liegt daher die **Aufgabe** zu Grunde, eine Lageranordnung der eingangs genannten Art so fortzubilden, dass es möglich wird, die Anordnung wesentlich leichter auszuführen, ohne große Stabilitätseinbußen hinnehmen zu müssen. Weiterhin soll auch bei geringfügigen Fehlstellungen zwischen Lager und Tragrolle eine problemlose Lagerung derselben durch das Lager sichergestellt werden. Auch soll diese Lageranordnung kostengünstig herstellbar sein. Die für die Herstellung erforderlichen Toleranzen sollen möglichst groß sein dürfen, ohne Gefahr der Produktion von Ausschuss zu laufen.

Die **Lösung** dieser Aufgabe durch die Erfindung ist dadurch gekennzeichnet, dass zwischen dem radial innenliegenden hohlzylindrischen Abschnitt des Trägerelements und dem Ring des Lagers ein Zwischenring angeordnet ist.

Dabei sind bevorzugt die hohlzylindrischen Abschnitte und der ringförmigen Abschnitt als einstückiges Bauteil ausgeführt.

Die Erstreckung des ringförmigen Abschnitts in Achsrichtung beträgt vorzugsweise höchstens 20 %, besonders vorzugsweise höchstens 15 %, der Erstreckung der hohlzylindrischen Abschnitte in Achsrichtung.

Der ringförmige Abschnitt kann in der Mitte der axialen Erstreckung der hohlzylindrischen Abschnitte angeordnet sein.

Das Trägerelement kann aus Kunststoff, insbesondere aus Polyamid, bestehen; möglich ist auch die Ausführung des Trägerelements aus Leichtmetall, insbesondere aus Aluminium oder Magnesium.

Mindestens ein hohlzylindrischer Abschnitt kann an seiner vom ringförmigen Abschnitt entfernten radialen Umfangsfläche von der axialen Position des ringförmigen Abschnitts ausgehend konisch ausgebildet sein. Damit wird ein verbesserter axialer Halt des Trägerelements an den Umgebungsbauteilen erreicht. Bevorzugt kann vorgesehen werden, dass der Radius der inneren Umfangsfläche des inneren ringförmigen Abschnitts des Trägerelements von der axialen Position des ringförmigen Absclinitts aus abnimmt.

Um trotz des erreichten Leichtbaus des Trägerelements eine hinreichende Stabilität zu erreichen, kann es sich als vorteilhaft erweisen, wenn sich in radiale Richtung erstreckende flächig ausgebildete Stege zwischen den ringförmigen Abschnitten vorgesehen werden. Diese Stege sind bevorzugt mit dem ringförmigen Abschnitt verbunden sind, wobei eine besonders bevorzugte Ausbildung die einstückige Ausbildung von ringförmigem Abschnitt und Stegen vorsieht. Die Stege können sich axial zwischen dem ringförmigen Abschnitt und den axialen Endbereichen des Trägerelements erstrecken. Eine Weiterbildung sieht vor, dass mehrere Stege äquidistant über den Umfang der hohlzylindrischen Abschnitte angeordnet sind, beispielsweise 4 oder 8 Stege, und zwar beidseitig des ringförmigen Abschnitts.

Der Zwischenring kann mindestens einen den Ring des Lagers axial umgreifenden Bord aufweisen. Der Zwischenring kann aus Metall, insbesondere aus Stahl oder aus Leichtmetall, bestehen.

Zwischen dem radial außenliegenden hohlzylindrischen Abschnitt des Trägerelements und der Tragrolle und/oder zwischen dem radial innenliegenden hohlzylindrischen Abschnitt des Trägerelements und dem Zwischenring oder dem Ring des Lagers kann ferner in besonders bevorzugter Weise ein Dämpfungselement aus Elastomer- oder Gummimaterial angeordnet sein.

Die Dämpfungsschicht besteht also bevorzugt aus einem Elastomer, insbesondere aus Polyurethan, oder aus Gummimaterial.

Das Dämpfungselement kann dabei eine hohlzylindrische Form aufweisen.

Zwischen der Tragrolle und dem Dämpfungselement kann eine Hülse angeordnet sein. Diese kann das Dämpfungselement axial mittels eines sich radial nach innen erstreckenden Ringabschnitts umgreifen. Die Hülse kann ferner die Tragrolle axial mittels eines sich radial nach außen erstreckenden Ringabschnitts umgreifen. Sie besteht beispielsweise aus Blech. Zwischen der Tragrolle und der Hülse kann ein Dichtungselement, insbesondere ein O-Ring, angeordnet sein.

Zwischen mindestens zwei der Bauteile Ring des Lagers, Zwischenring, hohlzylindrischem Abschnitt des Trägerelements, Dämpfungselement, Hülse und Tragrolle kann ein reibungserhöhendes Medium eingebracht oder eine Beschichtung aus einem reibungserhöhenden Medium auf mindestens eines der Bauteile aufgebracht sein.

Als reibungserhöhendes Medium kann beispielsweise und bevorzugt Zink eingesetzt werden. Demgemäß kann z. B. ein (einseitig) verzinktes Blech (für die Hülse) vorgesehen werden, um den reibungserhöhenden Effekt zu erzielen. Die Zinkschicht führt auch in vorteilhafter Weise zu einem Korrosionsschutz in der Passfuge. Ferner kann eine Zinkschicht sehr kostengünstig aufgebracht werden.

Das reibungserhöhende Medium kann dabei auch Diamant oder Bornitrid aufweisen; es kann sich dabei insbesondere um Diamantenpaste handeln. Das reibungserhöhende Medium kann aber auch beispielsweise Silizium-Karbid oder Korund aufweisen.

Der Diamant, das Bornitrid, das Silizium-Karbid oder der Korund liegt dabei bevorzugt als Korn mit einem Durchmesserbereich zwischen 1 µm und 100 µm, insbesondere mit einem Durchmesserbereich zwischen 10 µm und 80 µm, vor.

Möglich ist es dabei auch, dass das kornförmige Material (z. B. die Diamanten, das Silizium-Karbid, das Korund oder das Bornitrid) mit einem Bindemittel auf den genannten Bauteilen gebunden ist. Dabei kommt als Bindemittel bevorzugt eine metallische Schicht ist Frage, insbesondere eine Schicht aus Nickel. Dieses kann durch einen galvanischen Prozess aufgebracht sein.

Die Beschichtung mit reibungserhöhender Eigenschaft kann alternativ auch eine Molybdänschicht sein. Diese ist bevorzugt durch Flammspritzen aufgebracht.

Das mindestens eine Lager ist bevorzugt als Wälzlager ausgeführt.

Die Tragrolle kann als Rohr konstanter Wanddicke ausgebildet sein, das in beiden axialen Endbereichen mit je einem Lager gelagert ist.

Mit der vorgeschlagenen Lösung ergibt sich in vorteilhafter Weise, dass eine sehr leichte und dennoch stabile Ausbildung der Tragrollenanordnung erreicht werden kann.

Vorteilhaft ist auch, dass im Falle geringfügiger Fehlstellungen zwischen Lager und Tragrolle diese durch das im Querschnitt Doppel-T-förmig ausgebildete Trägerelement leicht ausgeglichen werden können.

Die benötigten Bauteile sind sehr einfach ausgebildet, weshalb die Herstellung der Lageranordnung sehr wirtschaftlich erfolgen kann.

Die bevorzugt vorgesehene Dämpfungsschicht aus Elastomer- oder Gummimaterial sorgt für einen Rundheitsausgleich und eine Schwingungsentkopplung. Ferner werden hierdurch stoßartige Lasten besser abgefangen.

Ein weiterer wesentlicher Vorteil der vorgeschlagenen Lösung beim Einsatz der reibungserhöhenden Beschichtung ist, dass die Drehmomentübertragung wesentlich verbessert werden kann. Es können höchste Drehmomente übertragen werden, ohne dass es zu einem Lösen der Verbindung der Bauteile kommt. Weiterhin ist ein Durchrutschen von Bauteilen weitgehend ausgeschlossen. Dies macht sich besonders vorteilhaft bemerkbar, wenn Umlaufbiegung im Betrieb der Tragrolle auftritt, die aufgrund der gewählten Ausgestaltung der Lageranordnung keine negative Wirkung entfalten kann.

Umgekehrt ist bei vorgegebenem zu übertragenden Drehmoment eine kleinere und leichtere Konzeption der Lageranordnung möglich.

Dieses Ergebnis ist bereits bei einem relativ kurzen Passungssitz zwischen den beteiligten Bauteilen erreichbar.

Die vorgeschlagene Lageranordnung wird bevorzugt im Tagebau eingesetzt und ist hier ein wesentlicher Bestandteil einer Tragrollenvorrichtung. Hier besteht ein hoher Bedarf an qualitativ hochwertigen und leichten Lageranordnungen, die sich durch eine hohe Lebensdauer und einen komfortablen Betrieb auszeichnen.

In der Zeichnung sind Ausführungsbeispiele der Erfindung dargestellt.
- Fig. 1: zeigt den Radialschnitt durch eine Lageranordnung mit einer Tragrolle, die von einem Lager gelagert wird,
- Fig. 2: zeigt den Radialschnitt durch ein Trägerelement der Lageranordnung gemäß einer alternativen Ausführungsform und
- Fig. 3: zeigt in perspektivischer Darstellung das Trägerelement der Lageranordnung in einer weiter alternativen Ausführungsform.

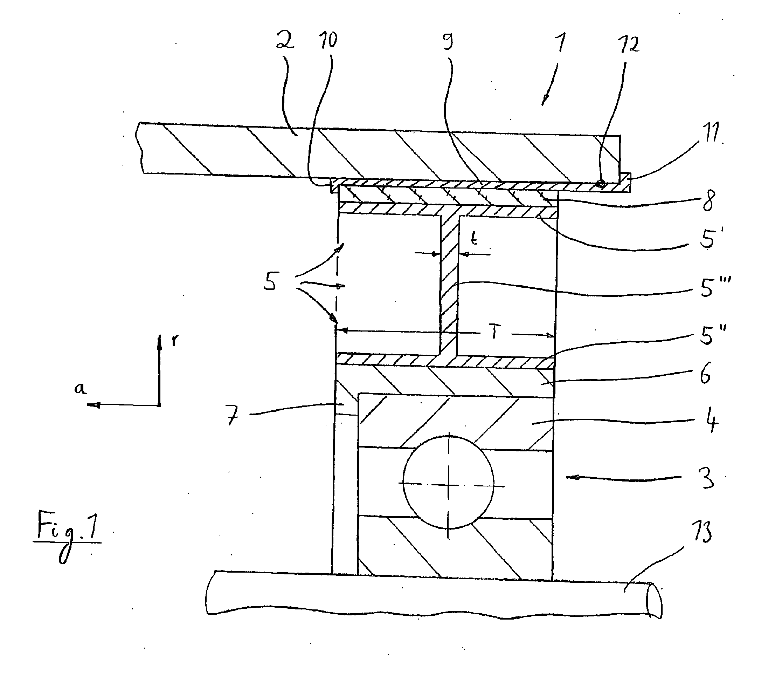

In Fig. 1 ist eine Lageranordnung 1 zu sehen, die dazu dient, eine Tragrolle 2 einer Fördereinrichtung zu lagern. Dargestellt ist eine Welle 13, auf der ein Rillenkugellager 3 festgelegt ist. Der Außenring 4 des Rillenkugellagers 3 trägt einen Zwischenring 6, der einen einseitigen Bord 7 aufweist, der den Außenring 4 axial umgreift und für ihn eine axiale Anlage bildet.

Die Tragrolle 2 ist als hohlzylindrisches Bauteil, also als Rohr, ausgebildet, wobei in beiden axialen Endbereichen eine Lageranordnung 1 angeordnet ist, wie sie in der Figur zu sehen ist. In die nach innen gerichtete Oberfläche der Tragrolle 2 ist eine Hülse 9 eingepresst, die mit Presspassung in der Tragrolle 2 sitzt. Zwischen der Hülse 9 und dem Zwischenring 6 sind - radial weiter außenliegend - ein Dämpfungselement 8 aus Elastomer- oder Gummimaterial angeordnet und - radial weiter innenliegend - ein Trägerelement 5.

Das Dämpfungselement 8 ist vorliegend als hohlzylindrische Schicht ausgeführt. Das Elastomer- bzw. Gummimaterial kann mit der Hülse 9 und/oder mit dem Trägerelement 5 durch einen Spritzgießprozess oder durch einen Vulkanisationsprozess direkt verbunden sein.

Wesentlich ist, dass das Trägerelement 5 zwei sich in Achsrichtung a der Tragrolle 2 bzw. des Lagers 3 erstreckende hohlzylindrische Abschnitte 5' und 5'' aufweist, die mit einem sich in radiale Richtung r erstreckenden ringförmigen Abschnitt 5''' verbunden sind. Möglich ist es auch, dass der ringförmige Abschnitt 5''' zur radialen Richtung einen Winkel einschließt (nicht dargestellt); dieser Winkel kann bis zu 45° betragen.

Demnach hat das Trägerelement 5 im dargestellten Radialschnitt eine Doppel-T-förmige Ausgestaltung, die es ermöglicht, dass Fehlstellungen zwischen den Achsen der Tragrolle 2 und des Lagers 3 elastisch ausgeglichen werden können, ohne hohe Kräfte im Lager zu verursachen - über die elastische Wirkung des Dämpfungselements 8 hinaus.

Erreicht bzw. begünstigt wird dies dadurch, dass die Erstreckung t des ringförmigen Abschnitts 5''' in Achsrichtung a höchstens 20 %, vorzugsweise höchstens 10 % bis 15 %, der Erstreckung T der hohlzylindrischen Abschnitte 5', 5'' in Achsrichtung a beträgt.

Vorteilhaft ist, dass in mindestens einem axialen Abschnittsbereich der Tragrolle 2 zwischen der inneren zylindrischen Oberfläche der Tragrolle 2 und dem Dämpfungselement 8 die Hülse 9 angeordnet ist, die die Tragrolle 2 einseitig axial überragt und im axialen Endbereich der Tragrolle 2 einen sich radial nach außen erstreckenden Ringabschnitt 11 aufweist. Dieser Ringabschnitt 11 kann auch als Auskragung angesprochen werden und bildet einen definierten axialen Anschlag für die Tragrolle 2. Eine axiale Fixierung der Tragrolle 2 relativ zur Hülse 9 ist damit in vereinfachter Weise möglich.

Die Tragrolle 2 und die Hülse 9 sind dabei fest miteinander verbunden, was z. B. durch eine Verschweißung unterstützt werden kann. Die Dichtigkeit zwischen Hülse 9 und Tragrolle 2 kann durch ein Dichtungselement 12 - im Ausführungsbeispiel in Form eines O-Rings - hergestellt werden.

Andererseits umgreift ein Ringabschnitt 10 am anderen axialen Ende der Hülse 9 das Dämpfungselement 8 und bietet insoweit für dieses einen axialen Anschlag.

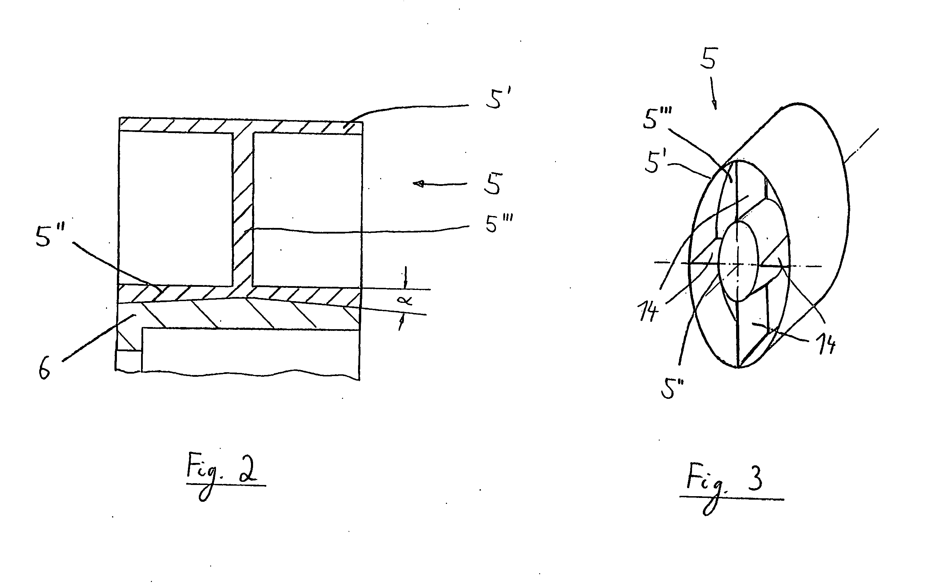

In Fig. 2 ist zu sehen, dass für das Trägerelement 5 auch vorgesehen werden kann, dass die radial innere Oberfläche des hohlzylindrischen Abschnitts 5'' (und/oder die radial äußere Oberfläche des hohlzylindrischen Abschnitts 5' - ist nicht dargestellt) einen konischen Verlauf haben kann. Vorliegend erstreckt sich die radial innere Oberfläche des hohlzylindrischen Abschnitts 5" beiderseits der Mitte, d. h. beiderseits des ringförmigen Abschnitts 5''', konisch radial zu den axialen Enden des hohlzylindrischen Abschnitts 5" abfallend. Der Konuswinkel α ist hier übertrieben dargestellt. Es liegt zumeist im Bereich einiger weniger Grad, z. B. bei 1 bis 5°. Demgemäß liegt ein verbesserter axialer Halt zwischen dem Trägerelement 5 und dem Zwischenring 6 vor.

In Fig. 3 ist illustriert, mit welcher Maßnahme eine wesentliche Stabilitätserhöhung des Trägerelements 5 erreicht werden kann, ohne das Gewicht einer massiven Hülse in Kauf nehmen zu müssen. Hier sind beiderseits des ringförmigen Abschnitts 5''' Stege 14 vorgesehen, die einstückig mit den Abschnitten 5', 5" und 5'"' ausgeführt sind und die sich axial von dem ringförmigen Abschnitt 5''' bis zum axialen Ende der Abschnitte 5', 5'' erstrecken. Im Ausfiihrungsbeispiel sind vier Stege (auf jeder Seite des ringförmigen Abschnitts 5''') vorgesehen, die äquidistant über den Umfang verteilt angeordnet sind.

### Bezugszeichenliste

| | |
|---|---|
| 1 | Lageranordnung |
| 2 | Tragrolle |
| 3 | Lager (Wälzlager) |
| 4 | Ring des Lagers (Außenring) |
| 5 | Trägerelement |
| 5' | hohlzylindrischer Abschnitt |
| 5'' | hohlzylindrischer Abschnitt |
| 5''' | ringförmiger Abschnitt |
| 6 | Zwischenring |
| 7 | Bord |
| 8 | Dämpfungselement |
| 9 | Hülse |
| 10 | Ringabschnitt |
| 11 | Ringabschnitt |
| 12 | Dichtungselement (O-Ring) |
| 13 | Welle |
| 14 | Steg |
| | |
| a | Achsrichtung |
| r | radiale Richtung |
| t | Erstreckung des ringförmigen Abschnitts |
| T | Erstreckung der hohlzylindrischen Abschnitte |
| α | Winkel |

## Patentansprüche

1. Lageranordnung (1) mit einer zumindest abschnittsweise hohlzylindrisch ausgebildeten Tragrolle (2), mit mindestens einem die Tragrolle (2) lagernden Lager (3), wobei zwischen einem Ring (4) des Lagers (3) und der Tragrolle (2) direkt oder indirekt ein Trägerelement (5) angeordnet ist, wobei das Trägerelement (5) zwei sich in Achsrichtung (a) der Tragrolle (2) bzw. des Lagers (3) erstreckende hohlzylindrische Abschnitte (5', 5'') aufweist, die mit einem sich in radiale Richtung (r) oder unter einem Winkel zur radialen Richtung erstreckenden ringförmigen Abschnitt (5''') verbunden sind,
**dadurch gekennzeichnet,**
**dass** zwischen dem radial innenliegenden hohlzylindrischen Abschnitt (5'') des Trägerelements (5) und dem Ring (4) des Lagers (3) ein Zwischenring (6) angeordnet ist.

2. Lageranordnung nach Anspruch 1, **dadurch gekennzeichnet, dass** die hohlzylindrischen Abschnitte (5', 5") und der ringförmigen Abschnitt (5''') als einstückiges Bauteil ausgeführt sind.

3. Lageranordnung nach Anspruch 1 oder 2, **dadurch gekennzeichnet, dass** die Erstreckung (t) des ringförmigen Abschnitts (5''') in Achsrichtung (a) höchstens 20 %, vorzugsweise höchstens 15 %, der Erstreckung (T) der hohlzylindrischen Abschnitte (5', 5'') in Achsrichtung (a) beträgt.

4. Lageranordnung nach einem der Ansprüche 1 bis 3, **dadurch gekennzeichnet, dass** der ringförmige Abschnitt (5''') in der Mitte der axialen Erstreckung der hohlzylindrischen Abschnitte (5', 5") angeordnet ist.

5. Lageranordnung nach einem der Ansprüche 1 bis 4, **dadurch gekennzeichnet, dass** das Trägerelement (5) aus Kunststoff, insbesondere aus Polyamid (PA), oder aus Leichtmetall, insbesondere aus Aluminium oder Magnesium, besteht.

6. Lageranordnung nach einem der Ansprüche 1 bis 5, **dadurch gekennzeichnet, dass** mindestens ein hohlzylindrischer Abschnitt (5', 5'') an seiner vom ringförmigen Abschnitt (5''') entfernten radialen Umfangsfläche von der axialen Position des ringförmigen Abschnitts (5''') ausgehend konisch ausgebildet ist.

7. Lageranordnung nach Anspruch 6, **dadurch gekennzeichnet, dass** der Radius der inneren Umfangsfläche des inneren ringförmigen Abschnitts (5") des Trägerelements (5) von der axialen Position des ringförmigen Abschnitts (5''') aus abnimmt.

8. Lageranordnung nach einem der Ansprüche 1 bis 7, **dadurch gekennzeichnet, dass** sich in radiale Richtung erstreckende flächig ausgebildete Stege (14) zwischen den ringförmigen Abschnitten (5', 5") angeordnet sind.

9. Lageranordnung nach Anspruch 8, **dadurch gekennzeichnet, dass** die Stege (14) mit dem ringförmigen Abschnitt (5''') verbunden sind.

10. Lageranordnung nach Anspruch 8 oder 9, **dadurch gekennzeichnet, dass** sich die Stege (14) axial zwischen dem ringförmigen Abschnitt (5''') und den axialen Endbereichen des Trägerelements (5) erstrecken.

11. Lageranordnung nach einem der Ansprüche 1 bis 10, **dadurch gekennzeichnet, dass** der Zwischenring (6) mindestens einen den Ring (4) des Lagers (3) axial umgreifenden Bord (7) aufweist.

12. Lageranordnung nach einem der Ansprüche 1 bis 11, **dadurch gekennzeichnet, dass** der Zwischenring (6) aus Metall, insbesondere aus Stahl oder aus Leichtmetall, besteht.

13. Lageranordnung nach einem der Ansprüche 1 bis 12, **dadurch gekennzeichnet, dass** zwischen dem radial außenliegenden hohlzylindrischen Abschnitt (5') des Trägerelements (5) und der Tragrolle (2) und/oder zwischen dem radial innenliegenden hohlzylindrischen Abschnitt (5") des Trägerelements (5) und dem Zwischenring (6) oder dem Ring (4) des Lagers (3) ein Dämpfungselement (8) aus Elastomer- oder Gummimaterial angeordnet ist.

14. Lageranordnung nach Anspruch 13, **dadurch gekennzeichnet, dass** zwischen der Tragrolle (2) und dem Dämpfungselement (8) eine Hülse (9) angeordnet ist, wobei vorzugsweise die Hülse (9) das Dämpfungselement (8) axial mittels eines sich radial nach innen erstreckenden Ringabschnitts (10) umgreift.

15. Lageranordnung nach einem der Ansprüche 1 bis 14, **dadurch gekennzeichnet, dass** zwischen mindestens zwei der Bauteile Ring (4) des Lagers (3), Zwischenring (6), hohlzylindrischem Abschnitt (5', 5") des Trägerelements (5), Dämpfungselement (8), Hülse (9) und Tragrolle (2) ein reibungserhöhendes Medium eingebracht oder eine Beschichtung aus einem reibungserhöhenden Medium auf mindestens eines der Bauteile aufgebracht ist.

## Claims

1. Bearing arrangement (1) having a load-bearing roller (2) which is of hollow-cylindrical configuration at least on sections, having at least one bearing (3) which mounts the load-bearing roller (2), a carrier element (5) being arranged directly or indirectly between a ring (4) of the bearing (3) and the load-bearing roller (2), the carrier element (5) having two hollow-cylindrical sections (5', 5'') which extend in the axial direction (a) of the load-bearing roller (2) or the bearing (3) and are connected to an annular section (5''') which extends in the radial direction (r) or at an angle with respect to the radial direction, **characterized in that** an intermediate ring (6) is arranged between the radially inner hollow-cylindrical section (5'') of the carrier element (5) and the ring (4) of the bearing (3).

2. Bearing arrangement according to Claim 1, **characterized in that** the hollow-cylindrical sections (5' , 5'') and the annular section (5''') are configured as a single-piece component.

3. Bearing arrangement according to Claim 1 or 2, **characterized in that** the extent (t) of the annular section (5''') in the axial direction (a) is at most 20%, preferably at most 15%, of the extent (T) of the hollow-cylindrical sections (5', 5'') in the axial direction (a).

4. Bearing arrangement according to one of Claims 1 to 3, **characterized in that** the annular section (5''') is arranged in the middle of the axial extent of the hollow-cylindrical sections (5', 5'').

5. Bearing arrangement according to one of Claims 1 to 4, **characterized in that** the carrier element (5) is composed of plastic, in particular of polyamide (PA), or of lightweight metal, in particular of aluminium or magnesium.

6. Bearing arrangement according to one of Claims 1 to 5, **characterized in that** at least one hollow-cylindrical section (5', 5'') is of conical configuration on its radial circumferential face which is remote from the annular section (5'''), starting from the axial position of the annular section (5''').

7. Bearing arrangement according to Claim 6, **characterized in that** the radius of the inner circumferential face of the inner annular section (5'') of the carrier element (5) decreases from the axial position of the annular section (5''').

8. Bearing arrangement according to one of Claims 1 to 7, **characterized in that** webs (14) of flat configuration which extend in the radial direction are arranged between the ring-shaped sections (5', 5'').

9. Bearing arrangement according to Claim 8, **characterized in that** the webs (14) are connected to the annular section (5''').

10. Bearing arrangement according to Claim 8 or 9, **characterized in that** the webs (14) extend axially between the annular section (5''') and the axial end regions of the carrier element (5).

11. Bearing arrangement according to one of Claims 1 to 10, **characterized in that** the intermediate ring (6) has at least one rim (7) which engages axially around the ring (4) of the bearing (3).

12. Bearing arrangement according to one of Claims 1 to 11, **characterized in that** the intermediate ring (6) is composed of metal, in particular of steel or of lightweight metal.

13. Bearing arrangement according to one of Claims 1 to 12, **characterized in that** a damping element (8) which is made from elastomer or rubber material is arranged between the radially outer hollow-cylindrical section (5') of the carrier element (5) and the load-bearing roller (2) and/or between the radially inner hollow-cylindrical section (5'') of the carrier element (5) and the intermediate ring (6) or the ring (4) of the bearing (3).

14. Bearing arrangement according to Claim 13, **characterized in that** a sleeve (9) is arranged between the load-bearing roller (2) and the damping element (8), the sleeve (9) preferably engaging axially around the damping element (8) by means of an annular section (10) which extends radially to the inside.

15. Bearing arrangement according to one of Claims 1 to 14, **characterized in that** a friction-increasing medium is introduced between at least two of the components ring (4) of the bearing (3), intermediate ring (6), hollow-cylindrical section (5', 5'') of the carrier element (5), damping element (8), sleeve (9) and load-bearing roller (2), or a coating of a friction-increasing medium is applied to at least one of the components.

## Revendications

1. Ensemble palier (1) comprenant un rouleau porteur (2) réalisé au moins en partie sous forme cylindrique creuse, comprenant au moins un palier (3) supportant le rouleau porteur (2), un élément de support (5) étant disposé directement ou indirectement entre une bague (4) du palier (3) et le rouleau porteur (2), l'élément de support (5) présentant deux portions (5', 5") cylindriques creuses s'étendant dans la direction axiale (a) du rouleau porteur (2) ou du palier (3), lesquelles portions sont raccordées à une portion annulaire (5"') s'étendant dans la direction radiale (r) ou suivant un certain angle par rapport à la direction radiale,
**caractérisé en ce**
**qu'**entre la portion cylindrique creuse (5") située radialement à l'intérieur de l'élément de support (5) et la bague (4) du palier (3) est disposée une bague intermédiaire (6).

2. Ensemble palier selon la revendication 1, **caractérisé en ce que** les portions cylindriques creuses (5', 5") et la portion annulaire (5"') sont réalisées sous forme d'un composant d'une seule pièce.

3. Ensemble palier selon la revendication 1 ou 2, **caractérisé en ce que** l'étendue (t) de la portion annulaire (5"') dans la direction axiale (a) constitue au maximum 20 %, de préférence au maximum 15 %, de l'étendue (T) des portions cylindriques creuses (5', 5") dans la direction axiale (a).

4. Ensemble palier selon l'une quelconque des revendications 1 à 3, **caractérisé en ce que** la portion annulaire (5"') est disposée au centre de l'étendue axiale des portions cylindriques creuses (5', 5").

5. Ensemble palier selon l'une quelconque des revendications 1 à 4, **caractérisé en ce que** l'élément de support (5) se compose de plastique, en particulier de polyamide (PA), ou de métal léger, en particulier d'aluminium ou de magnésium.

6. Ensemble palier selon l'une quelconque des revendications 1 à 5, **caractérisé en ce qu'**au moins une portion cylindrique creuse (5', 5") est réalisée sous forme conique à partir de la position axiale de la portion annulaire (5"'), au niveau de sa surface périphérique radiale éloignée de la portion annulaire (5"').

7. Ensemble palier selon la revendication 6, **caractérisé en ce que** le rayon de la surface périphérique interne de la portion annulaire interne (5") de l'élément de support (5) diminue à partir de la position axiale de la portion annulaire (5"').

8. Ensemble palier selon l'une quelconque des revendications 1 à 7, **caractérisé en ce que** des membrures (14) réalisées sous forme plane et s'étendant dans la direction radiale sont disposées entre les portions annulaire (5', 5").

9. Ensemble palier selon la revendication 8, **caractérisé en ce que** les membrures (14) sont raccordées à la portion annulaire (5"').

10. Ensemble palier selon la revendication 8 ou 9, **caractérisé en ce que** les membrures (14) s'étendent axialement entre la portion annulaire (5"') et les régions d'extrémité axiales de l'élément de support (5).

11. Ensemble palier selon l'une quelconque des revendications 1 à 10, **caractérisé en ce que** la bague intermédiaire (6) présente au moins un bord (7) venant en prise axialement autour de la bague (4) du palier (3).

12. Ensemble palier selon l'une quelconque des revendications 1 à 11, **caractérisé en ce que** la bague intermédiaire (6) se compose de métal, en particulier d'acier ou de métal léger.

13. Ensemble palier selon l'une quelconque des revendications 1 à 12, **caractérisé en ce qu'**entre la portion cylindrique creuse (5') située radialement à l'extérieur de l'élément de support (5) et le rouleau porteur (2) et/ou entre la portion cylindrique creuse (5") située radialement à l'intérieur de l'élément de support (5) et la bague intermédiaire (6) ou la bague (4) du palier (3) est disposé un élément d'amortissement (8) en matériau élastomère ou en caoutchouc.

14. Ensemble palier selon la revendication 13, **caractérisé en ce qu'**entre le rouleau porteur (2) et l'élément d'amortissement (8) est disposée une douille (9), la douille (9) venant de préférence en prise autour de l'élément d'amortissement (8) axialement au moyen d'une portion annulaire (10) s'étendant radialement vers l'intérieur.

15. Ensemble palier selon l'une quelconque des revendications 1 à 14, **caractérisé en ce qu'**entre au moins deux des composants bague (4) du palier (3), bague intermédiaire (6), portion cylindrique creuse (5', 5") de l'élément de support (5), élément d'amortissement (8), douille (9) et rouleau porteur (2) est introduit un milieu augmentant la friction ou un revêtement en un milieu augmentant la friction est appliqué sur au moins l'un des composants.
